# FASCICULE DE BREVET EUROPEEN

(11) **EP 3 403 481 B1**
(45) Date de publication et mention de la délivrance du brevet: **19.08.2020**
(21) Numéro de dépôt: 18171976.6
(22) Date de dépôt: 14.05.2018
(51) Int. Cl.: A01B 73/06, A01B 51/04

(54) **CHÂSSIS PORTE OUTILS DE TRAVAIL DU SOL À RIPAGE LIMITÉ**
WERKZEUGHALTERAHMEN FÜR DIE BODENBEARBEITUNG MIT BEGRENZTER VERSCHIEBUNG
FRAME SUPPORTING SOIL-TILLING TOOLS WITH LIMITED SHIFTING

(30) Priorité: 15.05.2017 FR 1754268
(43) Date de publication de la demande: 21.11.2018
(73) Titulaire: Ribouleau Monosem, 79240 Largeasse (FR)
(72) Inventeur: DOLE, Damien, 79300 BRESSUIRE (FR); GODART, Luc, 49360 TOUTLEMONDE (FR); MOUSSET, Freddy, 79320 CHANTELOUP (FR)
(74) Mandataire: Kessler, Marc

(56) Documents cités:
- EP-A1- 2 371 194
- WO-A1-2017/059259
- FR-A1- 2 992 144
- US-A- 5 232 054
- US-B1- 6 408 950

## Description

### Objet de l'invention

Le domaine de l'invention est celui de la conception et de la fabrication des dispositifs de travail du sol destinés à être tractés par un véhicule tracteur à la surface d'un champ afin de travailler le sol, par exemple d'y semer des graines, d'y déposer du fertilisant, de biner le sol ou autre.

L'invention concerne notamment le châssis d'un tel dispositif.

### Etat de la technique

Les semoirs comprennent classiquement un châssis portant des éléments semeurs disposés à intervalle régulier pour déposer des graines généralement à l'unité dans des sillons formés dans le sol.

Afin de permettre d'ensemencer une surface importante à chaque passage, et ainsi d'augmenter la productivité, les semoirs présentent généralement une largeur importante, par exemple de l'ordre de 13 mètres.

Ils peuvent, par exemple, permettre de semer à chaque passage 16 rangs à un intervalle compris entre 60 et 80 cm ou bien 24 rangs à intervalle compris entre 45 cm et 50,8 cm (20").

Ils peuvent également permettre d'apporter pendant le semis de l'engrais sous forme solide ou liquide par l'intermédiaire d'une trémie, montée sur le châssis.

Les semoirs doivent pouvoir être déplacés sur route pour être déplacés depuis leur zone de stockage vers différentes surfaces cultivables.

La législation routière n'autorise le déplacement des semoirs sur la voie publique que dans la mesure où leur largeur est limitée à une certaine valeur. Par exemple, la législation française autorise la circulation sur la voie publique des semoirs dont la largeur comprise entre 3 et 3,50 mètres selon le nombre de rangs pouvant être ensemencés à chaque passage par ceux-ci.

Pour satisfaire la législation, les semoirs de grande largeur sont donc pliables.

On connaît ainsi des semoirs dont le châssis comprend une flèche comprenant une première extrémité solidaire d'une tête d'attelage prévue pour permettre d'atteler le semoir à un véhicule tractant, et une deuxième extrémité solidaire d'un corps de châssis auquel sont liées au moins deux ailes latérales (ou tronçons arrière latéraux), portant des éléments semeurs, et mobiles entre au moins:
- une position de travail dans laquelle les ailes sont déployées et s'étendent dans le prolongement l'une de l'autre de part et d'autre de la flèche sensiblement perpendiculairement à celle-ci et sensiblement parallèlement au sol sur lequel le semoir est déplacé, et
- une position de transport dans laquelle les ailes sont repliées horizontalement pour s'étendre le long de la flèche.

Certains semoirs peuvent également comprendre une aile centrale (ou tronçon arrière central) fixe qui s'étend entre les ailes latérales et dans le prolongement de celles-ci en position de travail pour optimiser l'implantation des graines et éviter le décalage des rangs.

Compte tenu de leur poids, les semoirs reposent sur des roues, au rang desquelles figurent:
- des roues porteuses principales, solidarisées au corps de châssis, sur lesquelles reposent le châssis en région centrale dans les positions de travail et de transport, et
- des roues porteuses secondaires, solidarisées aux ailes, sur lesquelles reposent les ailes du châssis en position de travail.

Les roues porteuses secondaires permettent de limiter le balancement latéral, de maintenir la hauteur de travail et d'augmenter la portance du châssis.

Lorsque les tronçons latéraux sont dans la position de travail, le châssis peut prendre une configuration de manœuvre dans laquelle les tronçons latéraux sont éloignés du sol de sorte que les outils qu'ils portent ne sont pas en prise avec le sol. Il est alors possible de manœuvrer facilement le châssis à la surface du sol, par exemple pour lui faire prendre un virage en bout de champs.

Notamment afin d'éviter une charge négative sur l'attelage, tendant à décoller l'avant du châssis du sol, l'axe de rotation des roues porteuses principales se trouve décalés de celui des roues porteuses secondaires selon l'axe longitudinal de la flèche. Les masses sont alors mieux réparties.

Toutefois, compte tenu de ce décalage, un fort ripage des roues porteuses secondaires est observé lorsque le châssis, en état de manœuvre, est déplacé sur le sol en particulier lorsqu'il prend des virages, par exemple en bout de champ. Ce ripage tend à endommager la surface du sol et à engendrer des contraintes mécaniques importantes sur le châssis.

Il existe donc un besoin de limiter le ripage des roues porteuses d'un châssis porte outils de travail du sol au cours de son déplacement sur le sol.

Le document US 5 232 054 décrit un semoir comprenant un châssis comprenant une paire de roues de transport doubles, et deux sections latérales munies à leur extrémité externe d'un roue de support, les deux sections étant pivotantes vers l'avant pour le transport et pouvant se mouvoir d'avant en arrière, durant les manœuvres de retournement sur le terrain.

### Buts de l'invention

L'invention a notamment pour objectif d'apporter une solution efficace à au moins certains de ces différents problèmes.

En particulier, selon au moins un mode de réalisation, un objectif de l'invention est de fournir un châssis de dispositif de travail du sol dont le déplacement à la surface du sol en état de manœuvre n'endommage pas la surface du sol.

Notamment, l'invention a pour objectif, selon au moins un mode de réalisation, de fournir un tel châssis dont le ripage des roues porteuses soit nul ou à tout le moins plus faible que selon l'art antérieur.

Un autre objectif de l'invention est, selon au moins un mode de réalisation, de fournir un tel châssis qui soit simple et/ou robuste et/ou économique.

### Résumé de l'invention

L'invention concerne un châssis porte outils de travail du sol comprenant une flèche centrale, un corps de châssis solidaire d'une extrémité de ladite flèche, et au moins un tronçon arrière latéral solidaire du corps de châssis et portant des outils, le corps de châssis reposant sur des roues porteuses principales et le au moins un tronçon arrière latéral reposant sur au moins une roue porteuse secondaire, le châssis pouvant prendre un état de manœuvre dans lequel le au moins un tronçon arrière latéral est déployé par rapport à la flèche et éloigné du sol de sorte que les outils ne sont pas en prise avec le sol.

Selon l'invention, dans ledit état de manœuvre, la au moins une roue porteuse secondaire peut prendre au moins:
- une position de déplacement sensiblement en ligne droite du châssis, et une position de giration dans laquelle la valeur absolue de la distance entre la roue porteuse secondaire et un plan essentiellement orthogonal au sol et passant par l'axe de rotation des roues porteuses principales est plus faible que dans la position de déplacement sensiblement en ligne droite du châssis.

L'invention consiste donc à ramener l'au moins une roue porteuse secondaire portée par un tronçon arrière latéral dans l'axe des roues porteuses principale de sorte qu'elle soit située plus prêt d'un axe passant par le centre du virage. Ceci permet de limiter le ripage de cette roue, et ainsi de limiter la dégradation du sol en cours de virage et de réduire les contraintes mécanique transmises au châssis en cours de virage.

Selon une caractéristique possible, la valeur absolue de l'angle α entre :
- la projetée, dans un plan essentiellement horizontal, de l'axe de rotation desdites roues principales, et
- la projetée, dans le plan essentiellement horizontal, d'un axe passant par le point d'intersection entre le plan médian de la roue porteuse secondaire et son axe de rotation et par le point d'intersection entre l'axe de rotation des roues principales et l'axe longitudinal de la flèche,
   est plus faible dans la position de giration que dans la position de déplacement sensiblement en ligne droite du châssis.

Selon une caractéristique possible, un châssis selon l'invention comprend des moyens de commande d'un déplacement de la au moins une roue porteuse secondaire dans la position de giration lorsque le châssis effectue un virage.

Selon une caractéristique possible, un châssis selon l'invention comprend des moyens de commande d'un déplacement du au moins un tronçon arrière latéral pour placer la au moins une roue porteuse secondaire dans sa position de giration lorsque le châssis effectue un virage.

Selon une caractéristique possible, un châssis selon l'invention comprend des moyens d'attelage à un véhicule tracteur, le châssis comprenant des moyens de détection d'un décalage angulaire entre l'axe longitudinal de la flèche et l'axe longitudinal du véhicule tracteur, délivrant au moins une information de décalage angulaire aux moyens de commande.

Selon une caractéristique possible, les moyens de commande sont configurés pour commander un déplacement dans la position de giration de la au moins une roue porteuse secondaire situé(e) du côté vers lequel le véhicule tracteur se décale angulairement par rapport à la flèche

Selon une caractéristique possible, le au moins un tronçon arrière porte au moins un outil appartenant au groupe comprenant:
- les éléments semeurs;
- les éléments bineurs ;
- les éléments d'enfouissement de fertilisant.

L'invention concerne également un procédé de manœuvre d'un châssis porte outils de travail du sol comprenant une flèche centrale, un corps de châssis solidaire d'une extrémité de la flèche, et au moins un tronçon arrière latéral solidaire du corps de châssis et portant des outils, le corps de châssis reposant sur des roues porteuses principales et le au moins un tronçon arrière latéral reposant sur au moins une roue porteuse secondaire, le châssis pouvant prendre un état de manœuvre dans lequel le au moins un tronçon arrière latéral est déployé par rapport à la flèche et éloigné du sol de sorte que les outils ne sont pas en prise avec le sol, la au moins une roue porteuse secondaire pouvant prendre, dans l'état de manœuvre, au moins :
- une position de déplacement sensiblement en ligne droite du châssis, et
- une position de giration dans laquelle la valeur absolue de la distance entre la au moins une roue porteuse secondaire et un plan essentiellement orthogonal au sol et passant par l'axe de rotation des roues porteuses principales est plus faible que dans la position de déplacement sensiblement en ligne droite du châssis, le procédé comprenant :
   - une étape de configuration du châssis dans le état de manœuvre;
   - une étape de déplacement la au moins une roue porteuse secondaire de l'une à l'autre de ses positions de déplacement sensiblement en ligne droite du châssis et de giration.

Selon une caractéristique possible, un procédé selon l'invention comprend :
- une étape de détection d'un décalage angulaire entre l'axe longitudinal de la flèche et l'axe longitudinal d'un véhicule tracteur tractant le châssis;
- une étape de commande du déplacement de la au moins une roue porteuse secondaire dans sa position de giration en fonction du décalage angulaire.

Selon une caractéristique possible, un procédé selon l'invention comprend :
- une étape de détermination du côté vers lequel le véhicule tracteur se décale angulairement par rapport à la flèche, et
- une étape de déplacement dans la position de giration de la au moins une roue porteuse secondaire située du côté vers lequel le véhicule tracteur se décale angulairement par rapport à la flèche.

### Brève description des figures

La figure 1 illustre un châssis selon l'invention en perspective en état de travail.
La figure 2 illustre un châssis selon l'invention en perspective en état de manœuvre.
La figure 3 illustre un châssis selon l'invention en perspective en état de transport.
La figure 4 illustre un châssis selon l'invention en vue de dessus en état de travail.
La figure 5 illustre une vue partielle de dessus d'un châssis selon l'invention en état de manœuvre.
La figure 6 illustre une vue partielle de dessus d'un châssis selon l'invention dont l'un des tronçons arrière latéraux passe de l'une à l'autre de ses positions.
La figure 7 illustre une vue de dessus partielle d'un châssis selon l'invention dont un des tronçons latéraux se trouve en position de transport, l'autre se trouvant en position de travail.
La figure 8 illustre une vue partielle de côté d'un châssis selon l'invention en état de travail.
La figure 9 illustre une vue partielle de côté d'un châssis selon l'invention passant de l'un à l'autre de ses états de travail et de manœuvre.
La figure 10 illustre une vue partielle de côté d'un châssis selon l'invention en état de manœuvre.
La figure 11 illustre un procédé de manœuvre d'un châssis selon l'invention.
La figure 12 illustre une vue de dessus d'un châssis selon l'invention avec les roues porteuses secondaires d'un tronçon arrière latéral en position de déplacement essentiellement en ligne droite du châssis.
La figure 13 illustre une vue de dessus d'un châssis selon l'invention avec les roues porteuses secondaires d'un tronçon arrière latéral en position de giration.

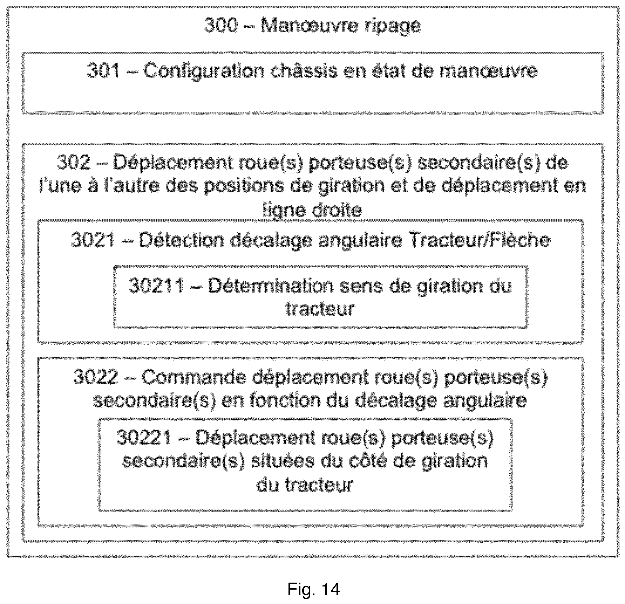

La figure 14 illustre un procédé de manœuvre d'un châssis selon l'invention en matière de gestion du ripage en giration.

### Description détaillée de l'invention

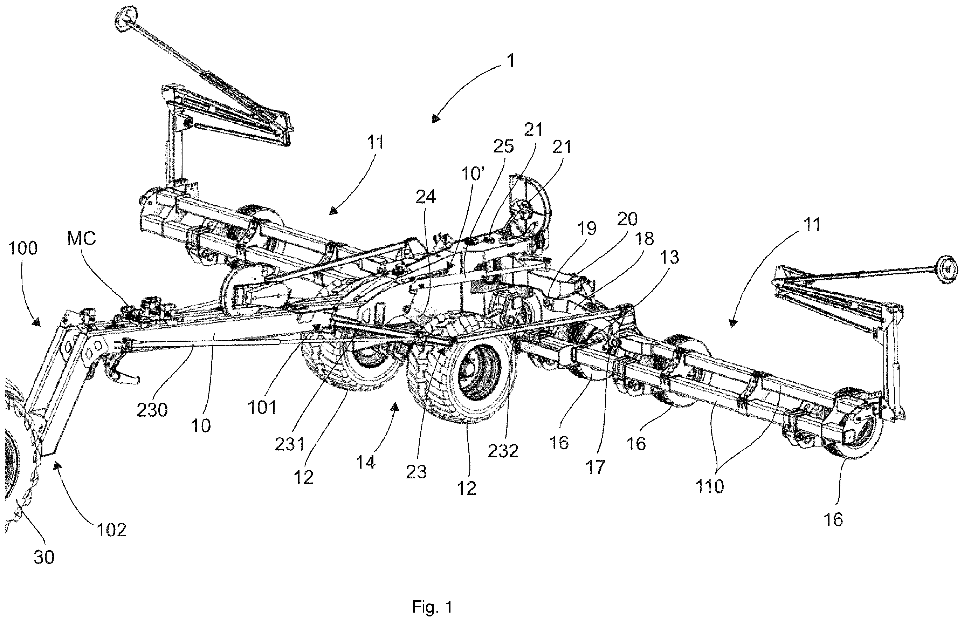

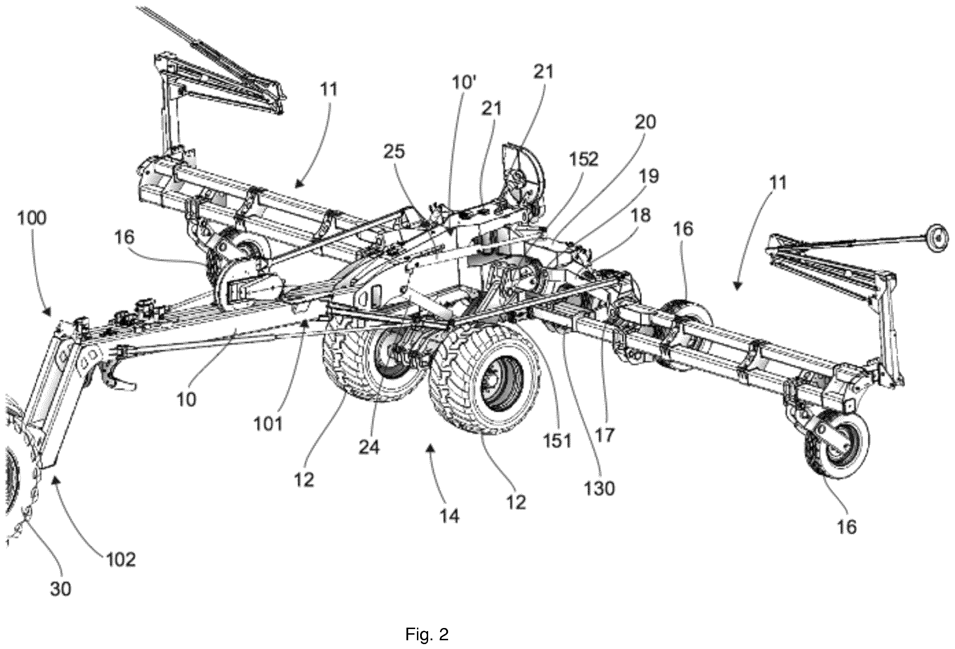

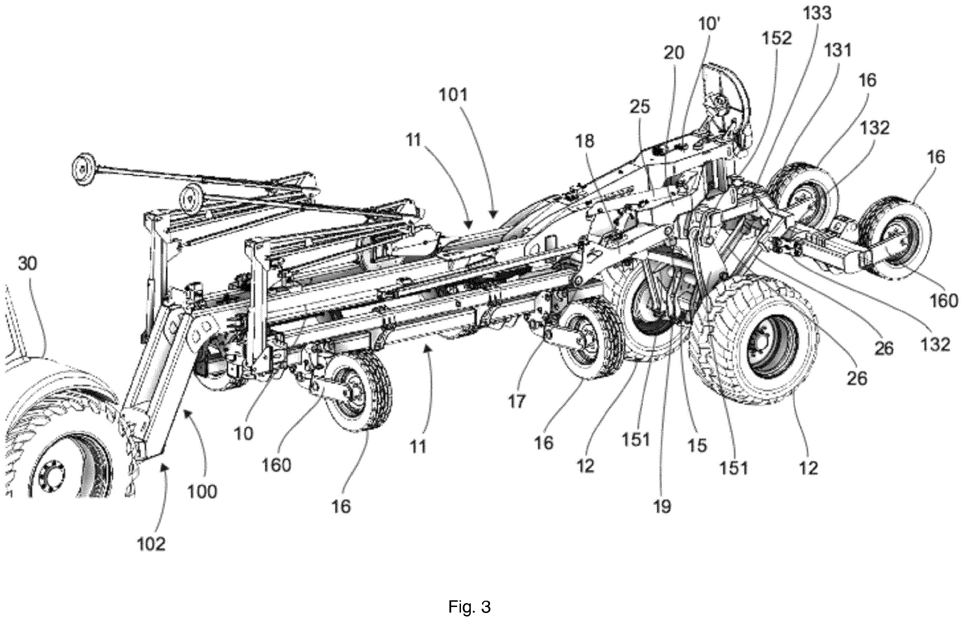

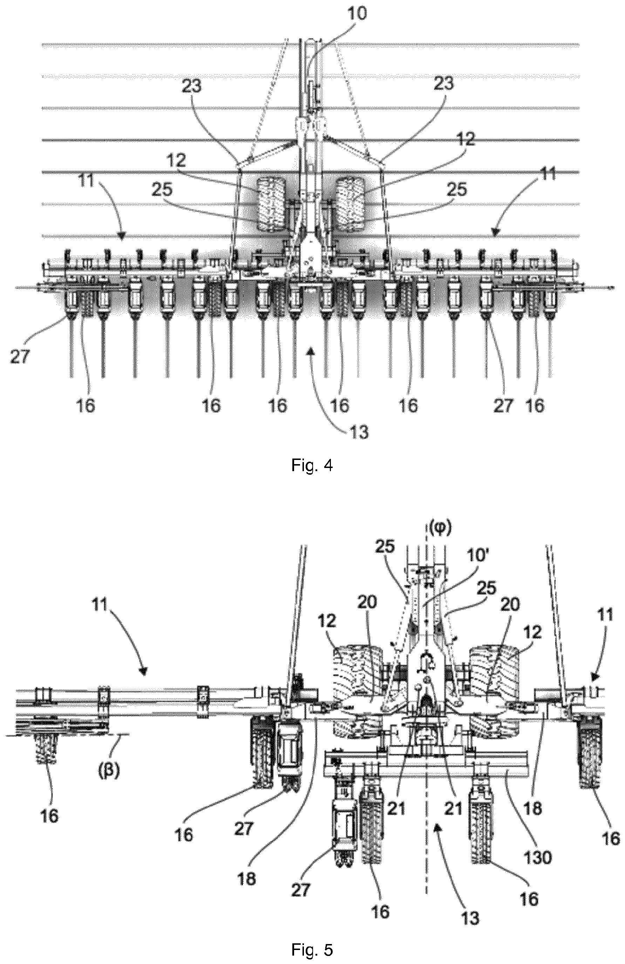

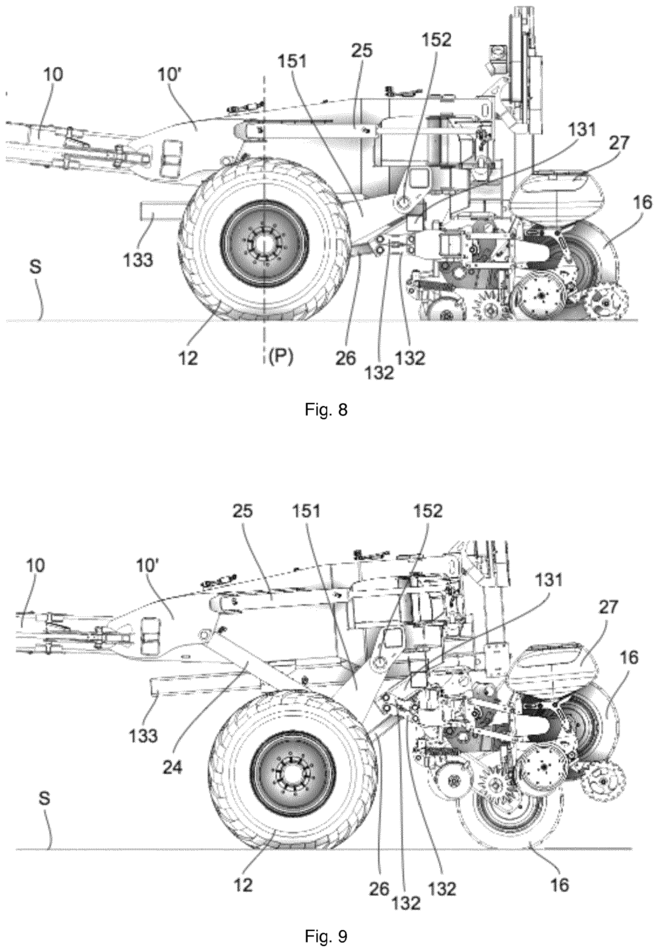

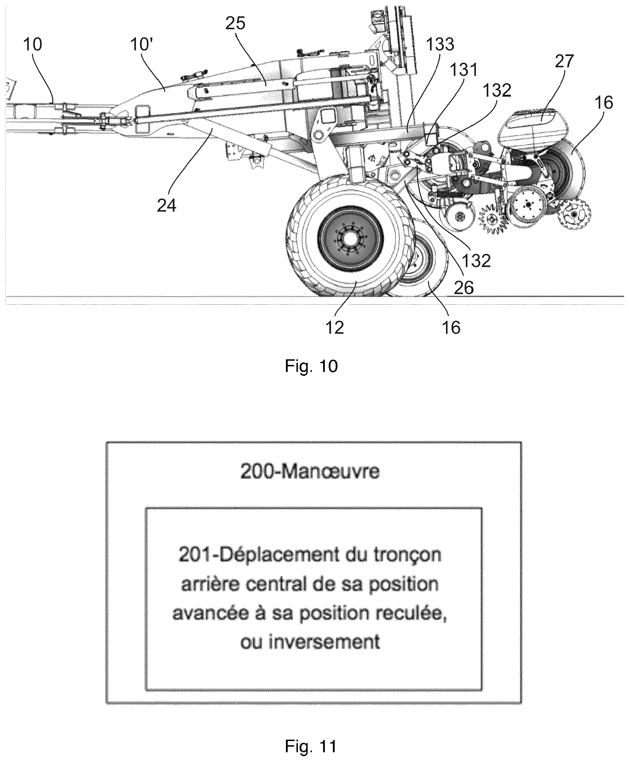

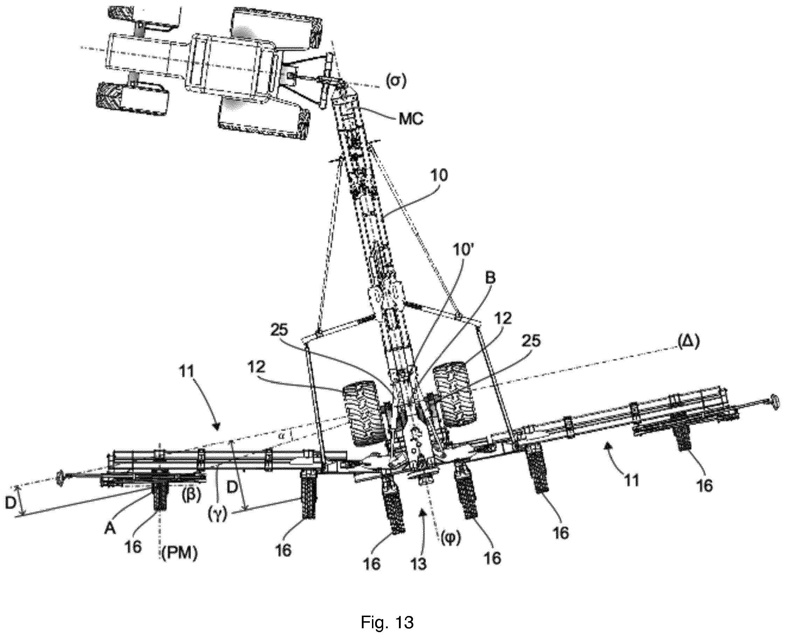

On présente en relation avec les figures 1 à 13, un exemple de châssis 1 porte outils de travail du sol selon l'invention, en particulier en fonctionnement, c'est-à-dire attelé à un véhicule tracteur 30. L'avant du châssis 1 désigne le côté destiné à être connecté au véhicule tracteur 30 alors que l'arrière désigne le côté opposé.

Ainsi que cela est représenté sur ces figures, un tel châssis 1 comprend une flèche 10. La flèche 10 comprend une extrémité avant 100 et une extrémité arrière 101. L'extrémité avant 100 comprend une tête d'attelage 102 destinée à coopérer avec l'attelage d'un véhicule tractant 30.

Le châssis 1 comprend un corps de châssis 10' comprenant une extrémité avant solidarisée à l'extrémité arrière 101 de la flèche 10 et une extrémité arrière, opposée à l'extrémité avant.

Le châssis 1 comprend deux tronçons arrière latéraux 11, portant des outils de travail du sol, par exemple des éléments semeurs 27. Les tronçons arrière latéraux 11 sont solidarisés de part et d'autre du corps de châssis 10'. Dans ce mode de réalisation, chaque tronçon arrière latéral 11 comprend deux poutres 110 solidarisées l'une à l'autre sensiblement parallèlement pour former un ensemble mono bloque. Une seule poutre pourrait toutefois être mise en œuvre. Un seul tronçon latéral 11 pourrait également être mis en œuvre.

Chaque tronçon arrière latéral 11 présente une extrémité solidarisée par une liaison pivot 17 d'axe sensiblement horizontal à une première extrémité d'une biellette 18.

La deuxième extrémité de chaque biellette 18, opposée à la première, est solidarisée au moyen d'une liaison pivot 19, d'axe sensiblement horizontal, à une première extrémité d'un bras 20.

Une deuxième extrémité du bras 20, opposée à la première, est solidarisée à l'extrémité arrière du corps de châssis 10' au moyen d'une liaison pivot 21 d'axe essentiellement vertical.

Lorsque deux tronçons arrière latéraux 11 sont mis en œuvre, l'axe de rotation d'un premier tronçon arrière latéral 11 et l'axe de rotation du deuxième tronçon arrière latéral 11, c'est-à-dire les axes des liaisons pivot 21, sont préférentiellement décalés selon l'axe longitudinal de la flèche 10.

Un vérin 25 relit chaque bras 20 au corps de châssis 10' pour permettre de faire tourner chaque tronçon arrière latéral 11, par rapport au corps de châssis 10', autour de l'axe de la liaison pivot 21 correspondant.

Chaque tronçon latéral 11 est relié à la flèche 10 au moyen d'un tirant à double triangulation 23 comprenant une première et une deuxième biellettes 230, 231 articulées à la flèche 10 à une première extrémité et articulées entre-elles à leur extrémité opposée, et une troisième bielle 232 articulée à une première extrémité au tronçon latéral arrière 11, ou en l'occurrence à la bielle 18 correspondante, et articulée à l'extrémité de la deuxième bielle 231 opposée à celle reliée à la flèche 10.

Le châssis 1 comprend un tronçon arrière central 13, portant de préférence également des outils de travail du sol, par exemple des éléments semeurs 27. Le tronçon arrière central 13 s'étend essentiellement perpendiculairement à l'axe longitudinal de la flèche 10. Il s'étend depuis l'extrémité arrière du corps de châssis 10' vers l'arrière du châssis 1 dans l'axe longitudinal de la flèche 10. Il s'étend entre les ailes latérales 11 et dans le prolongement de celles-ci en position de travail pour par exemple optimiser l'implantation des graines et éviter le décalage des rangs. Le tronçon arrière central 13 comprend une poutre 130. Il pourrait toutefois en comprendre plusieurs comme les tronçons arrière latéraux 11. Le tronçon arrière central 13 est porté par un berceau 131 auquel la poutre 130 est reliée de manière flottante. Pour cela, la poutre 130 est reliée de chaque côté du berceau 131, essentiellement en forme de U, au moyen d'un couple de biellettes 132 formant un parallélogramme déformable. Chaque biellette 132 est reliée à une extrémité à la poutre 130 au moyen d'une liaison pivot d'axe essentiellement horizontal et essentiellement orthogonal à l'axe longitudinal de la flèche 10, et est reliée à une extrémité opposée au berceau 131 par une liaison pivot d'axe essentiellement horizontal et essentiellement orthogonal à l'axe longitudinal de la flèche 10.

Le montage flottant du tronçon arrière central 13 permet d'ajuster sa position relative par rapport aux tronçons arrière latéraux 11 de sorte qu'ils soient convenablement alignés dans l'état de travail, comme cela ressortira pus clairement par la suite. Ceci permet en effet de régler sa hauteur relative par rapport aux tronçons arrière latéraux 11.

Le berceau 131 est solidaire d'une poutre 133 qui est montée mobile en translation d'avant en arrière par rapport au corps de châssis 10'. Le déplacement d'avant en arrière pourrait toutefois suivre une autre trajectoire que celle d'une translation (par exemple une rotation ou un mouvement combiné).

Le châssis 1 repose sur le sol par l'intermédiaire de roues porteuses principales 12 et de roues porteuses secondaires 16.

Les roues porteuses principales 12 forment un essieu 14. Cet essieu 14 est relié au corps de châssis 10' au moyen d'une fourche 15 comprenant deux jambes 151 ayant une première extrémité reliée à l'essieu et une deuxième extrémité reliée au corps de châssis 10' au moyen d'une liaison pivot 152 d'axe essentiellement horizontal et essentiellement orthogonal à l'axe longitudinal de la flèche 10.

Un vérin 24, ou une paire de vérins, relit l'essieu 14 au corps de châssis 10' pour permettre de faire pivoter l'essieu selon l'axe des liaisons pivot 152.

L'essieu 14 est relié au berceau 131 au moyen de deux barres 26. Chaque barre 26 est reliée à une extrémité à l'essieu 14 au moyen d'une liaison pivot d'axe essentiellement horizontal et essentiellement orthogonal à l'axe longitudinal de la flèche 10, et est reliée à une extrémité opposée au berceau 131 par une liaison pivot d'axe essentiellement horizontal et essentiellement orthogonal à l'axe longitudinal de la flèche 10.

Les tronçons arrière latéraux 11 et le tronçon arrière central 13 sont supportés préférentiellement par deux roues porteuses secondaires 16. Ils pourraient toutefois être supportés par un nombre de roues porteuses secondaires inférieur ou supérieur à deux. Le nombre de roues porteuses secondaires 16 pourrait être différent d'un tronçon 11 et/ou 13 à un autre.

Chaque roue porteuse secondaire 16 est reliée au tronçon qu'elle supporte par une liaison pivot d'axe essentiellement horizontal et essentiellement orthogonal à l'axe longitudinal de la flèche 10. Des vérins, non représentés, permettent d'agir sur les roues porteuses secondaires 16 pour les déplacer en rotation autour de l'axe de la liaison pivot correspondante. Plus précisément, chaque roue porteuse 16 secondaire est solidaire d'une fourche 160 mobile par rapport au tronçon arrière dont elle est solidaire.

Le châssis 1 comprend classiquement des moyens de commande pour actionner les différents vérins. Ces moyens de commande pourront par exemple être du type:
- manuel (operateur) en utilisant les commandes hydrauliques du tracteur;
- par séquençage hydraulique (bloc hydraulique) installé sur le semoir;
- par ECU (commande électronique de type automate programmable s'appuyant notamment sur l'information donnée par un ou plusieurs capteurs d'angle installés sur l'attelage et/ou sur le châssis).

Les tronçons arrière latéraux 11 et le tronçon arrière central 13 peuvent porter des outils du travail du sol appartenant par exemple au groupe comprenant:
- les éléments semeurs;
- les éléments bineurs ;
- les éléments d'enfouissement de fertilisant;
- ou autre.

Chaque tronçon arrière latéral 11 est monté mobile en rotation à l'extrémité arrière du corps de châssis 10' selon l'axe de la liaison pivot 21 correspondante entre au moins:
- une position de transport dans laquelle il est replié contre ou a proximité de la flèche 10 (Il s'étend alors de préférence essentiellement parallèlement celle-ci), et
- une position de travail dans laquelle il est déployé de sorte qu'il s'écarte de la flèche 10 (Il s'étend alors de préférence essentiellement perpendiculairement à la flèche 10).

Dans la position de travail, les tronçons arrière latéraux 11 s'étendant de part et d'autre du tronçon arrière central 13 et dans l'axe de celui-ci dans un plan essentiellement parallèle au sol.

Les roues porteuses principales 12 sont mobiles par rapport au corps de châssis 10' entre au moins :
- une position abaissée dans laquelle la distance entre le corps de châssis 10' et le sol est réduite, et
- une position relevée dans laquelle la distance entre le corps de châssis 10' et le sol est augmentée.

Chaque roue porteuse secondaire 16 est mobile par rapport au tronçon 11 et/ou 13 qu'elle supporte (notamment au(x) poutre(s) qu'il comprend) autour de l'axe de la liaison pivot qui la relit avec celui-ci entre au moins :
- une position basse dans laquelle la distance verticale entre l'axe de rotation de la roue porteuse secondaire 16 et le tronçon 11 ou 13 correspondant est réduite, et
- une position haute dans laquelle la distance verticale, entre l'axe de rotation de la roue porteuse secondaire 16 et le tronçon 11 ou 13 correspondant, est augmentée.

Certaines ou la totalité des roues porteuses secondaires 16 pourraient être fixes. Ceci est en particulier le cas si, dans leur position relevée, les roues porteuses principales 12 permettent de décoller suffisamment du sol les tronçons arrière.

Le tronçon arrière central 13 est monté mobile par rapport à l'extrémité arrière du corps de châssis 10' par coulissement de la poutre 133 entre au moins :
- une position avancée dans laquelle il se trouve rapproché de l'extrémité arrière du corps de châssis 10', et
- une position reculée dans laquelle il se trouve éloigné de l'extrémité arrière au corps de châssis 10'.

Le châssis 1 peut prendre trois états, à savoir :
- un état de transport dans lequel les tronçons arrière latéraux 11 sont dans la position de transport, les roues porteuses principales 12 sont dans la position relevée, les roues porteuses secondaires 16 sont dans la position basse, le tronçon arrière central est dans sa position reculée;
- un état de travail dans lequel les tronçons arrière latéraux 11 sont dans la position de travail, les roues porteuses principales 12 sont dans la position abaissée, les roues porteuses secondaires 16 sont dans la position basse, le tronçon arrière central 13 est dans sa position avancée;
- un état de manœuvre dans lequel les tronçons arrière latéraux 11 sont dans la position de travail, les roues porteuses principales 12 sont dans la position relevée, le tronçon arrière central 13 est dans sa position reculée, au moins certaines des roues porteuses secondaires 16 sont en position haute, les autres étant en position basse (par exemple les roues porteuses secondaires situées aux extrémités externes des tronçons arrière latéraux 11 sont dans la position haute, les autres étant dans la position basse).

Le fonctionnement du châssis 1, en particulier sa manœuvre 200 lorsqu'il est attelé à un véhicule tracteur 30, va à présent être décrit en partant de l'état de transport.

L'état de transport, dans lequel le châssis 1 repose seulement sur les roues porteuses principales 12, est pris pour permettre de déplacer le châssis sur la voie publique dans une version compacte de faible largeur.

Le passage de l'état de transport à l'état de travail est obtenu en agissant sur les moyens de commande configurés pour :
- agir sur les vérins 25 de sorte à faire pivoter les tronçons arrière latéraux 11 vers l'arrière autour des axes des liaisons pivot 21 de sorte à les déplacer de leur position de transport à leur position de travail dans laquelle ils sont au moins en partie déployés, se trouvent écartés de la flèche 10 et s'étendent par exemple essentiellement perpendiculairement à l'axe longitudinal de la flèche 10 (cette perpendicularité peut ne pas être parfaite par exemple à + / - 10°) ;
- agir sur les vérins commandant le passage des roues porteuses secondaires 16 de l'une à l'autre leurs positions haute et basse pour les maintenir en position basse;
- agir sur les vérins 24 de sorte à faire pivoter l'essieu 14 des roues porteuses principales 12 autour des axes des liaisons pivot 152 vers l'avant du châssis 1 pour les placer dans leur position abaissée, et à faire passer le tronçon arrière central 13 depuis sa position reculée à sa position avancée (étape 201), dans lequel il s'étend dans l'axe des tronçons arrière latéraux 11, les mouvements de l'essieu 14 et du tronçon arrière central 13 étant liés, du fait de la mise en œuvre des barres 26, pour passer de leurs positions relevée et reculée à leurs positions abaissée et avancée, et inversement.

Dans l'état de travail, le châssis 1 repose sur les roues porteuses principales 12 et sur les roues porteuses secondaires 16. Les roues porteuses principales 12 sont placées en avant des roues porteuses secondaires 16.

Lorsque les tronçons arrière latéraux 11 et le tronçon arrière central 13 portent des outils de travail du sol, par exemple des éléments semeurs 27, ceux-ci se trouvent en prise avec le sol. L'état de travail est pris lorsque l'on souhaite procéder au travail du sol, par exemple à l'ensemencement d'une surface cultivable.

Lorsqu'il est souhaité de manœuvrer le châssis 1 sur une surface cultivable, par exemple pour lui faire prendre un virage en bout de champs, le châssis 1 est placé dans son état de manœuvre.

Ce passage est obtenu en agissant sur les moyens de commande configurés pour :
- agir sur le vérin 24 de sorte à faire pivoter l'essieu des roues porteuses principales 12 autour des axes des liaisons pivot 152 vers l'arrière du châssis 1 pour les placer en position relevée, et à faire passer le tronçon arrière central 13 depuis sa position avancée à sa position reculée (étape 201) et
- agir sur les vérins commandant le passage des roues porteuses secondaires 16 de l'une à l'autre de leurs positions haute et basse pour placer au moins certaines d'entre elles en position haute, par exemple celles situées aux extrémités extérieures.

Le châssis 1 repose alors sur les roues porteuses principales 12 et au moins sur certaines roues porteuses secondaires 16, les outils de travail du sol, par exemple les éléments semeurs 27, n'étant pas en prise avec le sol. Il est alors possible de déplacer aisément le châssis 1 à la surface du sol.

Le fait que le passage des roues porteuses principales 12 de leur position abaissée à leur position relevée, dans laquelle est sont déplacées vers l'arrière du châssis, s'accompagne du recul du tronçon arrière central 13 dans sa position reculée, permet d'éviter que les roues porteuses principales 12 n'entrent en collision avec le tronçon arrière central 13 et les éléments qu'il porte, notamment les outils de travail du sol, par exemple les éléments semeurs 27.

Le passage dans l'état de transport, depuis l'état de travail ou l'état de manœuvre, est obtenu en agissant sur les moyens de commande configurés pour :
- si les roues porteuses principales 12 ne sont pas déjà en position relevée, agir sur les vérins 24 de sorte à faire pivoter l'essieu des roues porteuses principales 12 autour des axes des liaisons pivot 152 vers l'arrière du châssis 1 pour placer les roues porteuses principales 12 en position relevée, et à faire passer le tronçon arrière central 13 depuis sa position avancée à sa position reculée, les mouvements de l'essieu 14 et du tronçon arrière central 13 étant liés, du fait de la mise en œuvre des barres 26, pour passer de leurs positions abaissée et avancée à leurs positions relevée et reculée;
- agir sur les vérins commandant le passage des roues porteuses secondaires 16 de l'une à l'autre leurs positions haute et basse pour faire passer celles qui ne seraient pas déjà en position basse dans cette position;
- agir sur les vérin 25 de sorte à faire pivoter les tronçons arrière latéraux 11 vers l'avant autour des axes des liaisons pivot 21 de sorte à les déplacer de leur position de travail à leur position de transport dans laquelle ils s'étendent essentiellement le long de la flèche 10.

Lorsque les roues porteuses principales 12 se trouvent dans la position relevée, les tronçons arrière latéraux 11 s'étendent au-dessus roues porteuses principales 12. Les tronçons arrière latéraux 11 peuvent ainsi être déplacés de l'une à l'autre de leurs positions de transport et de travail sans interférer avec les roues porteuses principales 12 et être repliés au plus près de la flèche 10 pour augmenter la compacité du châssis 1 en position de transport.

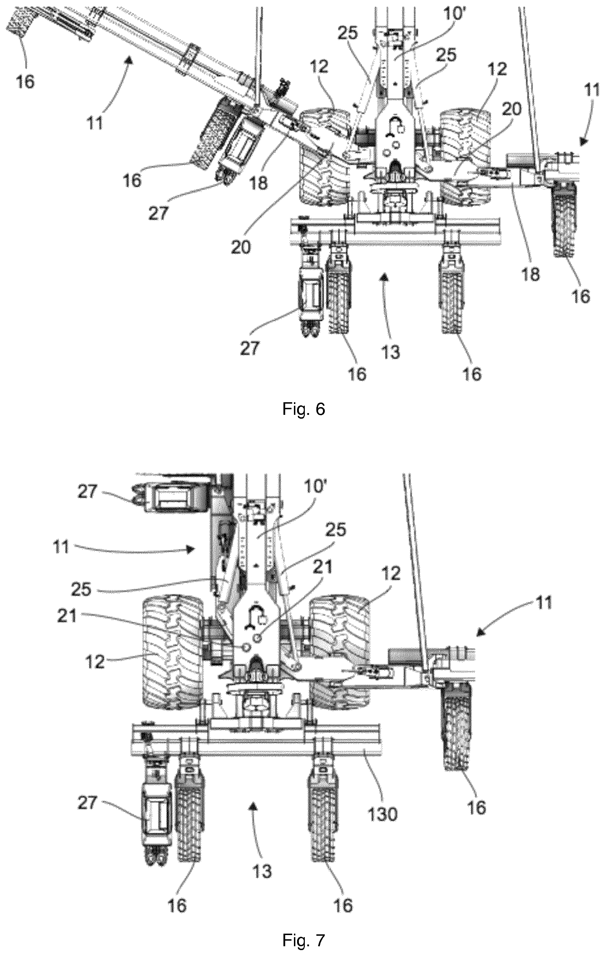

Ainsi que cela est visible sur la figure 6, du fait que les roues porteuses principales 12 sont reculées vers l'arrière du châssis 1 en position relevée associé au fait que les tronçons arrière latéraux 11 s'étendent essentiellement au-dessus des roues porteuses principales 12 lorsqu'elle sont en position relevée, permet aux tronçons arrière latéraux 11 de contourner, sans interférence, les roues porteuses 12 principales pour passer de l'une à l'autre de leurs positions de travail et de transport.

Dans la position de transport, les axes des liaisons 17 et 19 sont essentiellement horizontaux et essentiellement orthogonaux à l'axe longitudinal de la flèche 10.

Dans la position de travail, les axes des liaisons 17 et 19 sont essentiellement horizontaux et essentiellement parallèles à l'axe longitudinal de la flèche 10.

Les axes des liaisons 21 sont essentiellement verticaux.

Bien entendu, l'orientation de ces axes varie selon la position des roues porteuses principales 12.

Les axes de rotation des roues porteuses principale 12 et des roues porteuses secondaires 16 sont décalés le long de l'axe longitudinal de la flèche 10. Selon leur position, la position du centre de gravité du châssis 1 bouge. La position relative de ces axes est déterminée pour éviter le phénomène de charge négative sur l'attelage (on évite que la tête d'attelage tende à être déplacée vers le haut sous l'effet du poids de l'arrière du châssis).

La manière de limiter le ripage des roues porteuses en cours de déplacement, notamment en virage, la manœuvre du châssis 1 en état de manœuvre va à présent être abordée.

De manière plus générale, dans l'état de manœuvre, les tronçons arrière latéraux 11 sont déployés par rapport à la flèche 10, et les tronçons arrière latéraux 11 et central 13 sont éloignés du sol de sorte que les outils qu'ils portent ne sont pas en prise avec le sol. Le châssis 1 peut alors être aisément déplacé sur une surface cultivable par exemple pour prendre un virage en bout de champ.

Dans l'état de manœuvre, les roues porteuses secondaires 16 supportant les tronçons arrière latéraux, peuvent prendre, par rapport au châssis 1, au moins :
- une position de déplacement sensiblement en ligne droite du châssis 1, lorsque le châssis 1 est déplacé selon une trajectoire essentiellement droite, et
- une position dite de giration par rapport au châssis 1, lorsque le châssis 1 est déplacé selon une direction courbe en virage.

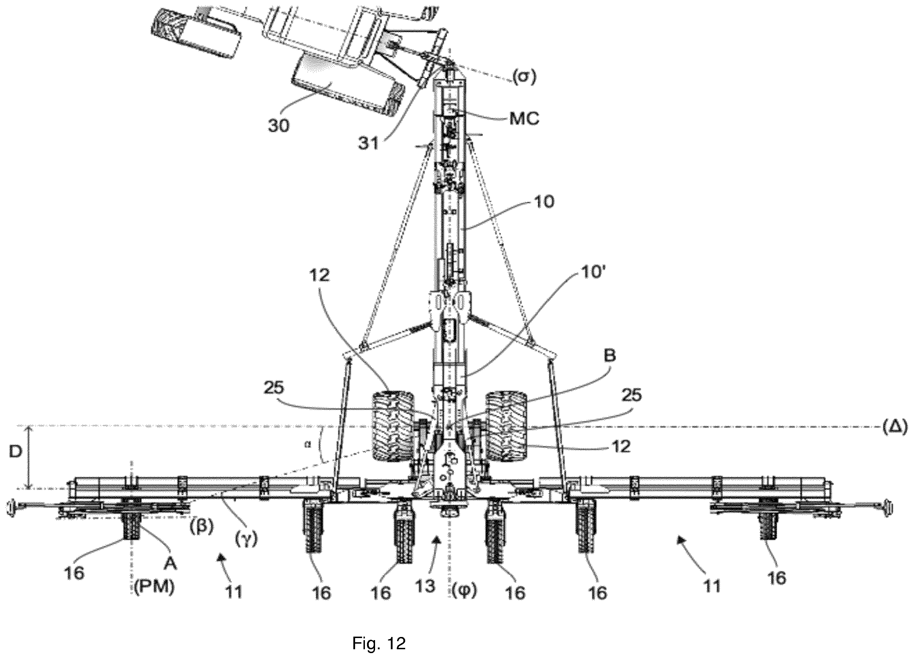

Dans leur position de déplacement sensiblement en ligne droite, représenté à la figure 12, les roues porteuse secondaires 16 se trouvent à une distance donnée D du plan (P) essentiellement orthogonal au sol et passant par l'axe de rotation (Δ) des roues porteuses principales 12. La projetée, dans un plan essentiellement horizontal de l'axe de rotation (Δ) des roues principales 12, et la projetée, dans ce plan essentiellement horizontal, d'un axe (ϕ) passant par le point d'intersection A entre le plan médian (PM) d'une roue porteuse secondaire 16 et son axe de rotation (β) et par le point d'intersection B entre l'axe de rotation (Δ) des roues principales 12 et l'axe longitudinal (ϕ) de la flèche 10 forme un angle α.

Dans leur position de giration la valeur absolue de la distance D entre les roues porteuses secondaires 16 (en particulier celles solidaires du tronçon latéral situé du côté vers lequel tourne le tracteur) et le plan (P) essentiellement orthogonal au sol et passant par l'axe de rotation (Δ) des roues porteuses principales 12 est plus faible que dans la position de déplacement sensiblement en ligne droite du châssis 1.

En particulier, dans la position de giration, on cherche à réduire la distance D entre l'axe de rotation (Δ) des roues principales 12 et le point d'intersection A entre le plan médian PM de la roue secondaire 16 concernée et son axe de rotation (β).

On cherche ainsi à ramener idéalement la roue porteuse secondaire 16 sur le point de centre du virage.

Selon une autre approche, la valeur absolue de l'angle α est plus faible dans la position de giration que dans la position de déplacement sensiblement en ligne droite du châssis 1.

Idéalement, dans la position de giration, on cherche à réduire à zéro l'angle α pour la roue porteuse secondaire 16 située la plus à l'extrémité du tronçon arrière latéral 11 du côté duquel le tracteur 30 tourne. Ceci permet de limiter le ripage au niveau de cette roue.

Lorsqu'un tronçon arrière latéral 11 est supporté par plus d'une, par exemple deux, roues porteuses secondaires 16, un compromis peut-être obtenu en choisissant la valeur de l'angle α pour la roue porteuse secondaire 16 située la plus à l'extrémité du tronçon arrière latéral 11 du côté duquel le tracteur 30 tourne, de manière telle que la roue porteuse secondaire 16 la plus à l'extérieur se situe en avant de l'axe de rotation des roues porteuses principales 12. Ainsi, la roue porteuse secondaire 16 la plus à l'extérieur se trouve devant l'axe de rotation des roues porteuses principales 12 alors que la roue la plus au centre se trouve derrière cet axe mais plus proche de lui. On réduit ainsi le ripage sur les deux roues porteuses secondaires 16.

Les moyens de commande MC sont configurés pour commander un déplacement de la ou des roues porteuses secondaires 16 concernées dans la position de giration lorsque le châssis 1 effectue un virage.

Les moyens de commande sont configurés pour commander un déplacement des tronçons arrière latéraux 11 pour placer les roues porteuses secondaires 16 concernées dans leur position de giration, lorsque le châssis 1 effectue un virage. Ils agissent alors sur le vérin 25 correspondant.

Le passage dans la position de giration correspondant alors à un repli partiel du tronçon arrière latéral 11 correspondant vers sa position de transport.

Le châssis 1 comprend des moyens de détection 31 d'un décalage angulaire entre l'axe longitudinal (ϕ) de la flèche 10 et l'axe longitudinal (σ) du véhicule tracteur 30 auquel est attelé le châssis 1, délivrant au moins une information de décalage angulaire aux moyens de commande MC. Il pourra par exemple s'agir d'un capteur d'angle et/ou de position de type mécanique, électrique, optique ou autre, comme par exemple un potentiomètre ou un codeur.

Les moyens de commande MC sont alors configurés pour commander un déplacement dans la position de giration des roues porteuses secondaires 16 situées du côté vers lequel le véhicule tracteur 30 se décale angulairement par rapport à la flèche 10.

En ce qui concerne la manœuvre du châssis 1, en particulier quand il est attelé à un véhicule tracteur 30, pour gérer le ripage 300 en cours de giration du châssis 1, la manœuvre de celui-ci comprend :
- une étape 301 de configuration du châssis 1 dans l'état de manœuvre au cours de laquelle il est placé dans cet état;
- une étape 302 de déplacement de la ou des roues porteuses secondaires 16 concernées de l'une à l'autre de leurs positions de déplacement sensiblement en ligne droite du châssis 1 et de giration.

Le procédé comprend également :
- une étape 3021 de détection d'un décalage angulaire entre l'axe longitudinal de la flèche 10 et l'axe longitudinal du véhicule tracteur 30 tractant le châssis;
- une étape 3022 de commande du déplacement de la ou des roues porteuses secondaires 16 concernées dans leur position de giration en fonction du décalage angulaire.

Le procédé comprend également :
- une étape 30211 de détermination du côté vers lequel le véhicule tracteur 30 se décale angulairement par rapport à la flèche 10, et
- une étape 30221 de déplacement dans la position de giration des roues porteuses secondaires 16 concernées situées du côté vers lequel le véhicule tracteur 30 se décale angulairement par rapport à la flèche 10.

Dans une variante, un seul tronçon latéral 11 pourra être mis en œuvre.

Dans une autre variante, les roues porteuses principales 12 et le tronçon arrière 13 pourront ne pas être liés mécaniquement en mouvement. Des actionneurs différents pourront être mis en œuvre pour assurer d'une part le déplacement des roues porteuse principales 12 de l'une à l'autre de leurs positions et d'autre part le déplacement du tronçon arrière 13 de l'une à l'autre de ses positions. Les moyens de commande seront alors configurés pour synchroniser les mouvements des roues porteuses principales 12 et du tronçon arrière central 13 de sorte que le déplacement des roues porteuses principales 12 de leur position abaissée à leur position relevée s'accompagne d'un déplacement du tronçon arrière 13 de sa position avancée à sa position reculée, et inversement.

Le déplacement de la ou des roues porteuses secondaires 16 de l'une à l'autre de leur positions de giration et de déplacement sensiblement en ligne droite du châssis 1 est obtenu dans le mode de réalisation décrit plus haut en déplaçant le tronçon arrière latéral 11 correspondant. Dans une variante, ce tronçon latéral 11 pourra rester fixe et seule la ou les roues porteuses secondaires 16 concernées être déplacées directement de l'une à l'autre de ces positions.

Lorsqu'un tronçon arrière latéral 11 repose sur plusieurs roues porteuses secondaires 16, seules l'une d'entre elles, notamment celle située la plus à l'extérieur, peut être déplacée en position de giration en phase de virage. Alternativement, plusieurs roues secondaires 16 pourront être déplacée en position de giration soit individuellement soit collectivement lorsque le tronçon arrière latéral 11 dont elles sont solidaires est déplacé à cet effet.

Dans le mode de réalisation décrit, la flèche 10 est fixe. Dans une variante, elle pourrait être télescopique et comprendre au moins un élément avant et un élément arrière coulissant l'un par rapport à l'autre.

## Revendications

1. Châssis (1) porte outils de travail du sol (27) comprenant une flèche centrale (10), un corps de châssis (10') solidaire d'une extrémité de ladite flèche (10), et au moins un tronçon arrière latéral (11) solidaire dudit corps de châssis (10'), et portant des outils (27), ledit corps de châssis (10') reposant sur des roues porteuses principales (12) et ledit au moins un tronçon arrière latéral (11) reposant sur au moins une roue porteuse secondaire (16), ledit châssis (1) pouvant prendre un état de manœuvre dans lequel ledit au moins un tronçon arrière latéral (11) est déployé par rapport à ladite flèche (10) et éloigné du sol de sorte que lesdits outils (27) ne sont pas en prise avec le sol, ladite au moins une roue porteuse secondaire (16), dans ledit état de manœuvre, pouvant prendre au moins :
- une position de déplacement sensiblement en ligne droite dudit châssis (1), et
- une position de giration dans laquelle la valeur absolue de la distance (D) entre ladite au moins une roue porteuse secondaire (16) et un plan (P) essentiellement orthogonal au sol (S) et passant par l'axe de rotation (Δ) desdites roues porteuses principales (12) est plus faible que dans ladite position de déplacement sensiblement en ligne droite du châssis (1),
**caractérisé en ce que** ledit châssis (1) comprend des moyens de commande (MC) d'un déplacement de ladite au moins une roue porteuse secondaire (16), ou d'un déplacement dudit au moins un tronçon arrière latéral (11), pour placer ladite au moins une roue porteuse secondaire (16) dans ladite position de giration lorsque ledit châssis (1) effectue un virage.

2. Châssis selon la revendication 1 dans lequel la valeur absolue de l'angle α entre :
- la projetée, dans un plan essentiellement horizontal, de l'axe de rotation (Δ) desdites roues principales (12), et
- la projetée, dans ledit plan essentiellement horizontal, d'un axe (γ) passant par le point d'intersection (A) entre le plan médian (PM) de ladite roue porteuse secondaire (16) et son axe de rotation (β) et par le point d'intersection (B) entre l'axe de rotation (Δ) desdites roues principales (12) et l'axe longitudinal (ϕ) de ladite flèche (10), est plus faible dans ladite position de giration que dans ladite position de déplacement sensiblement en ligne droite du châssis (1).

3. Châssis selon la revendication 1 ou 2, comprenant des moyens d'attelage (102) à un véhicule tracteur (30), ledit châssis (1) comprenant des moyens de détection (31) d'un décalage angulaire entre l'axe longitudinal (ϕ) de ladite flèche (10) et l'axe longitudinal (σ) dudit véhicule tracteur (30), délivrant au moins une information de décalage angulaire auxdits moyens de commande (MC).

4. Châssis selon la revendication 3 dans lequel lesdits moyens de commande (MC) sont configurés pour commander un déplacement dans ladite position de giration de ladite au moins une roue porteuse secondaire (16) situé(e) du côté vers lequel ledit véhicule tracteur (30) se décale angulairement par rapport à ladite flèche (10).

5. Châssis selon l'une quelconque des revendications 1 à 4 dans lequel ledit au moins un tronçon arrière (11, 13) porte au moins un outil (27) appartenant au groupe comprenant :
- les éléments semeurs;
- les éléments bineurs ;
- les éléments d'enfouissement de fertilisant.

6. Procédé de manœuvre d'un châssis (1) porte outils de travail du sol (27) comprenant une flèche centrale (10), un corps de châssis (10') solidaire d'une extrémité de ladite flèche (10), et au moins un tronçon arrière latéral (11) solidaire dudit corps de châssis (10') et portant des outils (27), ledit corps de châssis (10') reposant sur des roues porteuses principales (12) et ledit au moins un tronçon arrière latéral (11) reposant sur au moins une roue porteuse secondaire (16), ledit châssis (1) pouvant prendre un état de manœuvre dans lequel ledit au moins un tronçon arrière latéral (11) est déployé par rapport à ladite flèche (10) et éloigné du sol de sorte que lesdits outils (27) ne sont pas en prise avec le sol, ladite au moins une roue porteuse secondaire (16) pouvant prendre, dans ledit état de manœuvre, au moins :
- une position de déplacement sensiblement en ligne droite du châssis (1), et
- une position de giration dans laquelle la valeur absolue de la distance (D) entre celle-ci et un plan (P) essentiellement orthogonal au sol (S) et passant par l'axe de rotation (Δ) desdites roues porteuses principales (12) est plus faible que dans ladite position de déplacement sensiblement en ligne droite du châssis (1),
ledit châssis (1) comprenant en outre des moyens de commande (MC) d'un déplacement de ladite au moins une roue porteuse secondaire (16), ou d'un déplacement dudit au moins un tronçon arrière latéral (11),
ledit procédé comprenant :
- une étape (301) de configuration dudit châssis (1) dans ledit état de manœuvre;
- une étape (302) de mise en œuvre desdits moyens de commande (MC) pour le déplacement de ladite au moins une roue porteuse secondaire (16) de l'une à l'autre de ses positions de déplacement sensiblement en ligne droite du châssis et de giration.

7. Procédé selon la revendication 6 comprenant :
- une étape (3021) de détection d'un décalage angulaire entre l'axe longitudinal (ϕ) de ladite flèche (10) et l'axe longitudinal (σ) d'un véhicule tracteur tractant (30) ledit châssis (1) ;
- une étape (3022) de commande du déplacement de ladite au moins une roue porteuse secondaire (16) dans sa position de giration en fonction dudit décalage angulaire.

8. Procédé selon la revendication 7 comprenant :
- une étape (30211) de détermination du côté vers lequel ledit véhicule tracteur (30) se décale angulairement par rapport à ladite flèche (10), et une étape (30221) de déplacement dans ladite position de giration de ladite au moins une roue porteuse secondaire (16) située du côté vers lequel ledit véhicule tracteur (30) se décale angulairement par rapport à ladite flèche (10).

## Patentansprüche

1. Tragrahmen (1) für Bodenbearbeitungswerkzeuge (27), welcher einen Mittelausleger (10), einen Rahmenkörper (10'), der mit einem Ende des Auslegers (10) fest verbunden ist, und wenigstens einen seitlichen hinteren Abschnitt (11), der mit dem Rahmenkörper (10') fest verbunden ist und Werkzeuge (27) trägt, umfasst, wobei der Rahmenkörper (10') auf Haupttragrädern (12) ruht und der wenigstens eine seitliche hintere Abschnitt (11) auf wenigstens einem sekundären Tragrad (16) ruht, wobei der Rahmen (1) einen Rangierzustand annehmen kann, in welchem der wenigstens eine seitliche hintere Abschnitt (11) in Bezug auf den Ausleger (10) ausgefahren und vom Boden entfernt ist, so dass sich die Werkzeuge (27) nicht mit dem Boden in Eingriff befinden, wobei das wenigstens eine sekundäre Tragrad (16) in dem Rangierzustand wenigstens einnehmen kann:
- eine Position der im Wesentlichen geradlinigen Bewegung des Rahmens (1) und
- eine Kreisbewegungsposition, in welcher der absolute Betrag des Abstands (D) zwischen dem wenigstens einen sekundären Tragrad (16) und einer Ebene (P), die im Wesentlichen orthogonal zum Boden (S) ist und durch die Drehachse (Δ) der Haupttragräder (12) verläuft, kleiner als in der Position der im Wesentlichen geradlinigen Bewegung des Rahmens (1) ist,
**dadurch gekennzeichnet, dass** der Rahmen (1) Mittel zur Steuerung (MC) einer Bewegung des wenigstens einen sekundären Tragrades (16) oder einer Bewegung des wenigstens einen seitlichen hinteren Abschnitts (11) umfasst, um das wenigstens eine sekundäre Tragrad (16) in die Kreisbewegungsposition zu bringen, wenn der Rahmen (1) eine Kurve beschreibt.

2. Rahmen nach Anspruch 1, wobei der absolute Betrag des Winkels α zwischen:
- der Projektion, in eine im Wesentlichen horizontale Ebene, der Drehachse (Δ) der Haupttragräder (12) und
- der Projektion, in die im Wesentlichen horizontale Ebene, einer Achse (γ), die durch den Schnittpunkt (A) zwischen der Mittelebene (PM) des sekundären Tragrades (16) und seiner Drehachse (β) und durch den Schnittpunkt (B) zwischen der Drehachse (Δ) der Haupttragräder (12) und der Längsachse (ϕ) des Auslegers (10) verläuft,
in der Kreisbewegungsposition kleiner als in der Position der im Wesentlichen geradlinigen Bewegung des Rahmens (1) ist.

3. Rahmen nach Anspruch 1 oder 2, welcher Mittel zum Ankuppeln (102) an ein Zugfahrzeug (30) umfasst, wobei der Rahmen (1) Mittel zur Erkennung (31) eines Winkelversatzes zwischen der Längsachse (ϕ) des Auslegers (10) und der Längsachse (σ) des Zugfahrzeugs (30) umfasst, welche wenigstens eine Information über den Winkelversatz an die Steuerungsmittel (MC) liefern.

4. Rahmen nach Anspruch 3, wobei die Steuerungsmittel (MC) dafür ausgelegt sind, eine Bewegung des wenigstens einen sekundären Tragrades (16), das sich auf der Seite befindet, nach der das Zugfahrzeug (30) in Bezug auf den Ausleger (10) winkelmäßig abweicht, in die Kreisbewegungsposition zu steuern.

5. Rahmen nach einem der Ansprüche 1 bis 4, wobei der wenigstens eine hintere Abschnitt (11, 13) wenigstens ein Werkzeug (27) trägt, das der Gruppe angehört, welche umfasst:
- die Säelemente;
- die Hackelemente;
- die Elemente zum Unterpflügen von Düngemittel.

6. Verfahren zum Rangieren eines Tragrahmens (1) für Bodenbearbeitungswerkzeuge (27), welcher einen Mittelausleger (10), einen Rahmenkörper (10'), der mit einem Ende des Auslegers (10) fest verbunden ist, und wenigstens einen seitlichen hinteren Abschnitt (11), der mit dem Rahmenkörper (10') fest verbunden ist und Werkzeuge (27) trägt, umfasst, wobei der Rahmenkörper (10') auf Haupttragrädern (12) ruht und der wenigstens eine seitliche hintere Abschnitt (11) auf wenigstens einem sekundären Tragrad (16) ruht, wobei der Rahmen (1) einen Rangierzustand annehmen kann, in welchem der wenigstens eine seitliche hintere Abschnitt (11) in Bezug auf den Ausleger (10) ausgefahren und vom Boden entfernt ist, so dass sich die Werkzeuge (27) nicht mit dem Boden in Eingriff befinden, wobei das wenigstens eine sekundäre Tragrad (16) in dem Rangierzustand wenigstens einnehmen kann:
- eine Position der im Wesentlichen geradlinigen Bewegung des Rahmens (1) und
- eine Kreisbewegungsposition, in welcher der absolute Betrag des Abstands (D) zwischen demselben und einer Ebene (P), die im Wesentlichen orthogonal zum Boden (S) ist und durch die Drehachse (Δ) der Haupttragräder (12) verläuft, kleiner als in der Position der im Wesentlichen geradlinigen Bewegung des Rahmens (1) ist,
wobei der Rahmen (1) außerdem Mittel zur Steuerung (MC) einer Bewegung des wenigstens einen sekundären Tragrades (16) oder einer Bewegung des wenigstens einen seitlichen hinteren Abschnitts (11) umfasst,
wobei das Verfahren umfasst:
- einen Schritt (301) der Konfiguration des Rahmens (1) im Rangierzustand;
- einen Schritt (302) des Einsatzes der Steuerungsmittel (MC) für die Bewegung des wenigstens einem sekundären Tragrades (16) aus der einen seiner Positionen der im Wesentlichen geradlinigen Bewegung des Rahmens und der Kreisbewegung in die andere.

7. Verfahren nach Anspruch 6, welches umfasst:
- einen Schritt (3021) der Erkennung eines Winkelversatzes zwischen der Längsachse (ϕ) des Auslegers (10) und der Längsachse (σ) eines Zugfahrzeugs (30), das den Rahmen (1) zieht;
- einen Schritt (3022) der Steuerung der Bewegung des wenigstens einem sekundären Tragrades (16) in seine Kreisbewegungsposition in Abhängigkeit vom Winkelversatz.

8. Verfahren nach Anspruch 7, welches umfasst:
- einen Schritt (30211) der Bestimmung der Seite, nach welcher das Zugfahrzeug (30) in Bezug auf den Ausleger (10) winkelmäßig abweicht, und einen Schritt (30221) der Bewegung des wenigstens einem sekundären Tragrades (16), das sich auf der Seite befindet, nach welcher das Zugfahrzeug (30) in Bezug auf den Ausleger (10) winkelmäßig abweicht, in die Kreisbewegungsposition.

## Claims

1. Frame (1) supporting soil tilling tools (27), comprising a central boom (10), a frame body (10') secured to one end of said boom (10), and at least one lateral rear portion (11) secured to said frame body (10'), and bearing tools (27), said frame body (10') resting on main supporting wheels (12) and said at least one lateral rear portion (11) resting on at least one secondary supporting wheel (16), said frame (1) being able to take up a manoeuvring state in which said at least one lateral rear portion (11) is deployed with respect to said boom (10) and away from the ground such that said tools (27) are not engaged with the ground, said at least one secondary supporting wheel (16), in said manoeuvring state, being able to take up at least:
- a moving position of said frame (1) substantially in a straight line, and
- a turning position, in which the absolute value of the distance (D) between said at least one secondary supporting wheel (16) and a plane (P) approximately orthogonal to the ground (S) and passing through the axis of rotation (Δ) of said main supporting wheels (12) is less than in said moving position of the frame (1) substantially in a straight line,
**characterized in that** said frame (1) comprises control means (MC) for controlling a movement of said at least one secondary supporting wheel (16), or a movement of said at least one lateral rear portion (11), in order to put said at least one secondary supporting wheel (16) in said turning position when said frame (1) is cornering.

2. Frame according to claim 1, wherein the absolute value of the angle α between:
- the projection, in an approximately horizontal plane, of the axis of rotation (Δ) of said main wheels (12), and
- the projection, in said approximately horizontal plane, of an axis (γ) passing through the intersection point (A) between the median plane (PM) of said secondary supporting wheel (16) and the axis of rotation (β) thereof and through the intersection point (B) between the axis of rotation (Δ) of said main wheels (12) and the longitudinal axis (ϕ) of said boom (10) is less in said turning position than in said moving position of the frame (1) substantially in a straight line.

3. Frame according to claim 1 or 2, comprising means (102) for hitching to a tractor (30), said frame (1) comprising means (31) for detecting an angular offset between the longitudinal axis (ϕ) of said boom (10) and the longitudinal axis (σ) of said tractor (30), providing at least one item of angular offset information to said control means (MC).

4. Frame according to claim 3, wherein said control means (MC) are configured to command a movement into said turning position of said at least one secondary supporting wheel (16) situated on the side towards which said tractor (30) is angularly offset with respect to said boom (10).

5. Frame according to any one of claims 1 to 4, wherein said at least one rear portion (11, 13) bears at least one tool (27) belonging to the group comprising:
- sowing elements;
- hoeing elements;
- fertilizer burying elements.

6. Method for manoeuvring a frame (1) supporting soil tilling tools (27), comprising a central boom (10), a frame body (10') secured to one end of said boom (10), and at least one lateral rear portion (11) secured to said frame body (10'), and bearing tools (27), said frame body (10') resting on main supporting wheels (12) and said at least one lateral rear portion (11) resting on at least one secondary supporting wheel (16), said frame (1) being able to take up a manoeuvring state in which said at least one lateral rear portion (11) is deployed with respect to said boom (10) and away from the ground such that said tools (27) are not engaged with the ground, said at least one secondary supporting wheel (16), in said manoeuvring state, being able to take up at least:
- a moving position of the frame (1) substantially in a straight line, and
- a turning position, in which the absolute value of the distance (D) between the latter and a plane (P) approximately orthogonal to the ground (S) and passing through the axis of rotation (Δ) of said main supporting wheels (12) is less than in said position moving the frame (1) substantially in a straight line,
said frame (1) also comprising control means (MC) for controlling a movement of said at least one secondary supporting wheel (16), or a movement of said at least one lateral rear portion (11),
said method comprising:
- a step (301) of configuring said frame (1) in said manoeuvring state;
- a step (302) of employing said control means (MC) to move said at least one secondary supporting wheel (16) from one of its positions, moving the frame substantially in a straight line and turning, to the other.

7. Method according to Claim 6, comprising:
- a step (3021) of detecting an angular offset between the longitudinal axis (ϕ) of said boom (10) and the longitudinal axis (σ) of a tractor (30) pulling said frame (1);
- a step (3022) of commanding the movement of said at least one secondary supporting wheel (16) into its turning position depending on said angular offset.

8. Method according to Claim 7, comprising:
- a step (30211) of determining the side towards which said tractor (30) is angularly offset with respect to said boom (10), and a step (30221) of moving into said turning position of said at least one secondary supporting wheel (16) situated on the side towards which said tractor (30) is angularly offset with respect to said boom (10).
